# NEUE EUROPÄISCHE PATENTSCHRIFT

(11) **EP 1 264 715 B2**
(45) Veröffentlichungstag und Bekanntmachung des Hinweises auf die Entscheidung über den Einspruch: **11.02.2009**
(45) Hinweis auf die Patenterteilung: 05.04.2006
(21) Anmeldenummer: 02006246.9
(22) Anmeldetag: 20.03.2002
(51) Int. Cl.: B60H 1/00

(54) **Fahrzeugkühlsystem für eine temperaturerhöhende Einrichtung sowie Verfahren zur Kühlung der temperaturerhöhenden Einrichtung**
Vehicle cooling system for a temperature increasing device as well as method for the cooling of the temperature increasing device
Système de refroidissement d'un véhicule pour un dispositif d'augmentation de la température et méthode pour le refroidissement du dispositif d'augmentation de la température

(30) Priorität: 09.06.2001 DE 10128164
(43) Veröffentlichungstag der Anmeldung: 11.12.2002
(73) Patentinhaber: Behr GmbH & Co. KG, 70469 Stuttgart (DE)
(72) Erfinder: Brotz, Friedrich, 70195 Stuttgart (DE); Geskes, Peter, Dr., 70469 Stuttgart (DE); Pfender, Conrad, Dr.-Ing., 74354 Besigheim (DE); Damsohn, Herbert, Dr.-Ing., 73773 Aichwald (DE); Luz, Klaus, Dipl.-Ing., 71083 Herrenberg (DE)
(74) Vertreter: Bendel, Christian

(56) Entgegenhaltungen:
- EP-A- 1 255 317
- EP-A- 1 261 053
- DE-A- 4 124 889
- DE-C1- 4 408 960
- FR-A- 2 745 759
- US-A- 6 138 466

## Beschreibung

Die Erfindung betrifft ein Fahrzeug-Kühlsystem für eine temperaturerhöhende Einrichtung, insbesondere Fahrbatterie oder Brennstoffzelle, vorzugsweise für ein Elektro- oder Hybridfahrzeug, mit einem die Einrichtung unter Einbeziehung einer die Luftkonditonierung der Fahrgastzelle des Fahrzeugs dienenden Klimaanlage kühlenden Kühlmittel.

Eine Vorrichtung dieser Art ist z.B. aus der FR 2745759 bekannt. Bei bekannten Serien-Hybridfahrzeugen wird die eine temperaturerhöhende Einrichtung darstellende Fahrbatterie mit sie durchströmender Luft gekühlt. Da die Außenlufttemperatur an warmen Tagen über 30°C liegt, wird in solchen Fällen nicht die Umgebungsluft, sondern Luft aus dem Fahrgastinnenraum zur Batteriekühlung verwendet, die zwar ebenfalls aus dem Außenbereich stammt, jedoch vor dem Einströmen in die Fahrgastzelle von einer Klimaanlage abgekühlt und gegebenenfalls getrocknet wurde. Dieses bekannte Luftkühlungskonzept hat den Nachteil, dass eine starke Abhängigkeit der Batteriekühlleistung von der Lufttemperatur im Fahrgastinnenraum besteht. So kann bei Kurzstrecken die Fahrgastzellen-Lufttemperatur weit über den mindestens erforderlichen 30°C liegen. Ferner ist die Fahrgastinnenraumtemperatur von der Empfindung der sich in der Fahrgastzelle aufhaltenden Personen abhängig. Ist eine hinreichende Kühlung der Batterie nicht möglich, steht für das Fahrzeug der Hybridantrieb nicht mehr mit voller Antriebsleistung zur Verfügung. Darüber hinaus findet zwischen der Kühlluft und der Batterie ein relativ schlechter Wärmeübergang statt, so dass nur entsprechend geringe Wärmelasten abgeführt werden können. So sind Betriebssituationen möglich, in denen die tatsächlich abgeführte Wärmelast mehr als 70 % unterhalb der gewünschten, abzuführenden Wärmelast liegt.

US 6138466 offenbart ein Fahrzeug-Kühlsystem für eine Fahrbatterie für ein Elektrofahrzeug, mit einem die Einrichtung unter Einbeziehung einer die Luftkonditionierung der Fahrgastzelle des Fahrzeugs dienenden Klimaanlage kühlenden Kühlmittel, wobei das Kühlmittel eine Kühlflüssigkeit ist, die in einem Kühlkreis geführt wird mit einem ersten Wärmetauscher, ein Kältekreis der Klimaanlage einen Kompressor, einen Kondensator, ein Expansionsventil mit einem an einem Verdampferaustritt eine Überhitzungsmessung vornehmenden Überhitzungssensor und einen der Luftkonditionierung dienenden, ersten Verdampfer aufweist, weiterhin die Kühlflüssigkeit zu ihrer Kühlung thermisch in den Kältekreislauf der Klimaanlage eingebunden ist, derart, dass der dem Kältekreis der Klimaanlage zugehörige Teil des ersten Wärmetauschers einen zweiten Verdampfer bildet.

Der Erfindung liegt die Aufgabe zugrunde, ein Fahrzeug-Kühlsystem der eingangs genannten Art zu schaffen, bei dem deutlich höhere Wärmemengen abgeführt werden können. Insbesondere soll kein oder nur ein äußerst geringer Einfluss von der Lufttemperatur im Fahrgastinnenraum vorliegen.

Diese Aufgabe wird erfindungsgemäß durch ein Fahrzeug-Kühlsystem nach dem Anspruch 1 gelöst. Während im Stand der Technik die Klimaanlage nur indirekt zur Batteriekühlung herangezogen wird, indem ein Anteil der von der Klimaanlage des Fahrzeugs gekühlten Luft dem Fahrgastinnenraum entnommen und der Batterie zum Umströmen zugeführt und anschließend in die Außenatmosphäre entlassen wird, sieht die Erfindung eine direkte Kopplung der Klimaanlage mit der zu kühlenden temperaturerhöhenden Einrichtung vor. Erfindungsgemäß ist ein Kühlkreis vorgesehen, das heißt, ein Kühlmittel wird im Kreislauf geführt und kühlt dabei die Einrichtung. Das eingesetzte Kühlmittel wird somit nach seinem Kontakt mit der Einrichtung wiederverwendet und steht für einen erneuten Kühlzyklus zur Verfügung. Es ist thermisch in den Kältekreislauf der Klimaanlage eingebunden, so dass der Kühlkreis thermisch mit dem Kältekreis der Klimaanlage gekuppelt ist, so dass das ebenfalls umlaufende Kältemittel der Klimaanlage im gewünschten Umfange direkt und damit wirkungsvoll und ohne Zwischenschaltung weiterer Medienströme Einfluss auf den Kühlkreis nehmen kann. Als Kühlmittel wird eine Kühlflüssigkeit eingesetzt, die gegenüber der bekannten Luftkühlung erheblich bessere Wärmeübergangs-, Wärmeaufnahme- und Wärmeabtransporteigenschaften verfügt. Im Kältekreislauf der Klimaanlage wird ein Kältemittel eingesetzt, das im Zuge seines Kreislaufs verdampft, dann verdichtet wird und kondensiert und durch Expansion wieder die dampfförmige Phase annimmt. Als flüssiges Kühlmittel kommt insbesondere eine Sole (bevorzugt ein Wasser-Glysantin-Gemisch) zum Einsatz. Es eignen sich auch andere Kühlflüssigkeiten, die in der Lage sind, die Wärmelast der temperaturerhöhenden Einrichtung abzuführen. Das flüssige Kühlmittel kann aufgrund seines sehr guten Wärmeübergangs zu der Einrichtung, zum Beispiel zu den Wandungen von Batteriezellen große Wärmemengen selbst bei einem Kühlkreislauf mit relativ kleinem Volumenstrom abführen.

Nach der Erfindung ist vorgesehen, dass das Kühlmittel über einen ersten Wärmetauscher mit dem Kältemittel der Klimaanlage gekoppelt ist. Ein derartiger Wärmetauscher gewährleistet einen sehr guten Wärmeübergang zwischen dem Kühlmittel und dem Kältemittel und führt zu der erwähnten direkten Kupplung der Klimaanlage mit dem Kühlkreis, wobei die Medienströme der beiden Kreisläufe dennoch voneinander getrennt sind, also nicht miteinander kommunizieren.

Das Fahrzeug-Kühlsystem kann derart betrieben werden, dass im Kreislauf der Klimaanlage (Kältekreislauf) eine Überhitzung stattfindet. Das Kältemittel wird stromabwärts des ersten und/oder zweiten Verdampfers bis auf eine Überhitzungstemperatur gebracht. Diese dient zum Steuern oder Regeln des die Verdampfung beeinflussenden Expansionsventils, das zwischen dem Kondensator und dem ersten oder zweiten Verdampfer angeordnet ist. Zur Erfassung der Überhitzungstemperatur ist ein Überhitzungssensor vorhanden. Dieser befindet sich am Verdampferaustritt. Er dient der Messung der Überhitzung. Im Expansionsventil ist die Regelung oder Steuerung der dem Verdampfer zugeführten Kältemittelmenge integriert. Die Regelung oder Steuerung erfolgt in Abhängigkeit von der Überhitzungsmessung.

Eine Weiterbildung der Erfindung sieht vor, dass die Kühlflüssigkeit stets ihren Aggregatzustand beibehält. Die flüssige Phase bleibt also während des gesamten Umlaufs im Kühlkreis erhalten.

Der Kühlkreis weist mindestens eine Umwälzpumpe auf. Sie dient dazu, das Kühlmittel permanent oder in vorzugsweise temperaturabhängigen Intervallen zu fördern. Dabei passiert das Kühlmittel den Wärmetauscher, der die thermische Kopplung zur Fahrbatterie herstellt.

Der Kältekreis der Klimaanlage weist mindestens einen Kompressor, mindestens einen Kondensator, genau ein Expansionsventil und mindestens einen der Luftkonditionierung dienenden, ersten Verdampfer auf. Der Verdampfer der Klimaanlage dient der Kühlung der Luft des Fahrgastinnenraumes des Fahrzeugs. Er nimmt die Wärme der Fahrgastzellenluft auf. Der vom Verdampfer kommende Kältemitteldampf wird im nachgeschalteten Kompressor verdichtet und im Kondensator unter Temperaturanstieg kondensiert. Die dabei entstehende Wärme wird vorzugsweise an die Außenluft abgegeben.

Der dem Kältekreis der Klimaanlage zugehörige Teil des ersten Wärmetauschers bildet einen zweiten Verdampfer. Mithin wird das Kältemittel der Klimaanlage zum Teil im ersten Verdampfer und zum Teil, insbesondere zum übrigen Teil, im zweiten Verdampfer verdampft. Der erste Verdampfer nimmt die Wärme aus der Luft der Fahrgastzelle auf; der zweite Verdampfer dient der Aufnahme der von der Einrichtung erzeugten Wärme. Unter dem "zugehörigen Teil" des ersten Wärmetauschers ist der Bereich des ersten Wärmetauschers zu verstehen, der das Kältemittel der Klimaanlage führt. Dem Kühlkreis ist ein entsprechend anderer Teil des Wärmetauschers zugeordnet, der den Kühlmittelstrom führt. Bestimmungsgemäß stehen die beiden Teile des Wärmetauschers im innigen wärmetechnischen Kontakt, das heißt, es liegt ein sehr guter Wärmeübergang vor.

Die Anordnung kann derart getroffen sein, dass der erste und zweite Verdampfer getrennte Bauteile sind oder eine Baueinheit bilden.

Zur Steuerung/Regelung der Verdampferleistung beziehungsweise der Verdampferleistungen ist/sind der erste und/oder der zweite Verdampfer jeweils mit einem Bypass versehen. Der jeweilige Bypass erlaubt es, das Kältemittel ganz oder teilweise am entsprechenden Verdampfer vorbeizuführen, so dass dort kein oder nur ein entsprechend geringer Wärmeaustausch stattfindet. Zur definierten Beeinflussung kann der Bypass oder kann jeder Bypass ein Steuer- und/oder Regelventil aufweisen. Die Einstellung des Steuer- oder Regelventils erfolgt in Abhängigkeit von den Kühlprozess des Kühlsystems beeinflussenden Parametern. Als Parameter können beispielsweise die Temperatur der temperaturerhöhenden Einrichtung, die Außenlufttemperatur und/oder die Fahrgastinnenraumtemperatur herangezogen werden.

Der erste Verdampfer liegt stromaufwärts oder stromabwärts zum zweiten Verdampfer. Die Begriffe "stromaufwärts" beziehungsweise "stromabwärts" beziehen sich auf die Strömungsrichtung des Kältemittels der Klimaanlage. Mithin ist es alternativ möglich, dass zunächst der der temperaturerhöhenden Einrichtung zugeordnete zweite Verdampfer und dann der der Fahrgastzelle des Fahrzeugs zugeordnete erste Verdampfer durchströmt wird. Alternativ ist auch eine umgekehrte Reihenfolge denkbar. In den beiden erwähnten Fällen sind die Verdampfer somit in Reihe geschaltet. Alternativ kann auch eine Parallelschaltung vorgesehen sein. Dies führt dazu, dass ein Teilvolumenstrom des Kältemittels den ersten Verdampfer und ein anderer Teilvolumenstrom oder der übrige Teilvolumenstrom des Kältemittels den zweiten Verdampfer passiert. Bei mehr als zwei Verdampfern kann auch eine Kombination aus Reihen- und Parallelschaltung vorgesehen sein.

Eine Weiterbildung der Erfindung sieht einen -hinsichtlich der Kältemittelströmung- stromabwärts des ersten Verdampfers liegenden dritten Verdampfer vor, der einen Bestandteil eines zweiten Wärmetauschers zur Kühlung der temperaturerhöhenden Einrichtung bildet. Mithin liegt stromaufwärts des ersten Verdampfers der zweite Verdampfer und stromabwärts des ersten Verdampfers der dritte Verdampfer (jeweils in Strömungsrichtung des Kältemittels der Klimaanlage betrachtet). Die drei Verdampfer sind somit in Reihe geschaltet. Der erste Verdampfer dient der Kühlung der Fahrgastzellenluft; der zweite und dritte Verdampfer dienen der Kühlung der temperaturerhöhenden Einrichtung. Der zweite Verdampfer stellt somit eine Baugruppe des ersten Wärmetauschers dar und der dritte Verdampfer bildet eine Baugruppe des zweiten Wärmetauschers. Jeder der beiden Wärmetauscher stellt ein Bindeglied zwischen dem Kühlkreis und dem Kältekreis dar. Insbesondere kann vorgesehen sein, dass der erste und der zweite Wärmetauscher jeweils separate Bauteile sind oder dass der erste und der zweite Wärmetauscher eine Baueinheit bilden.

Zusätzlich zur Kühlung der temperaturerhöhenden Einrichtung mittels der erwähnten Klimaanlage kann sich im Kühlkreis mindestens ein zusätzlicher Kühler für das Kühlmittel befinden. Das Kühlmittel wird in einem solchen Falle sowohl von der Klimaanlage als auch durch den erwähnten Kühler gekühlt, der nicht der Klimaanlage angehört. Hierbei kann es sich beispielsweise um einen vom Fahrtwind durchströmten Kühler handeln. Mit dem zusätzlichen Kühler wird die Kühlleistung gesteigert. Der Kühler kann mit dem ersten und/oder zweiten Wärmetauscher parallel oder in Reihe geschaltet sein.

Schließlich betrifft die Erfindung ein Verfahren zur Kühlung einer temperaturerhöhenden Fahrzeug-Einrichtung, insbesondere Fahrbatterie oder Brennstoffzelle, vorzugsweise für ein Elektro- oder Hybridfahrzeug, wobei die Fahrzeug-Einrichtung mit einem in einem Kreislauf geführten flüssigen Kühlmittel gekühlt wird und ein Wärmeaustausch des Kühlmittels mit dem Kältemittel einer der Luftkonditionierung der Fahrgastzelle des Fahrzeugs dienenden Klimaanlage erfolgt.

Die Zeichnungen veranschaulichen die Erfindung anhand von Ausführungsbeispielen und zwar zeigt:
- Figur 1: ein Fahrzeug-Kühlsystem nach einem ersten Ausführungsbeispiel,
- Figur 2: ein weiteres Fahrzeug-Kühlsystem nach einem weiteren Ausführungsbeispiel,
- Figur 3: ein Fahrzeug-Kühlsystem, bei dem eine Parallelschaltung zweiter Verdampfer vorliegt,
- Figur 4: ein nicht zu der Erfindung gehöriges Fahrzeug-Kühlsystem,
- Figur 5: ein Fahrzeug-Kühlsystem, bei dem drei Verdampfer vorgesehen sind,
- Figur 6: ein der Figur 5 entsprechendes Fahrzeug-Kühlsystem, jedoch mit separierten Verdampfern,
- Figur 7: ein Abschnitt eines Fahrzeug-Kühlsystems, bei dem im Kühlkreis ein zusätzlicher Kühler für das Kühlmittel angeordnet ist,
- Figur 8: eine weitere Variante des Ausführungsbeispiels der Figur 7,
- Figur 9: eine weitere Variante der Ausführungsbeispiele der Figuren 7 und 8,
- Figuren 10 bis 12: Betriebszustandsdarstellungen des Ausführungsbeispiels der Figur 9.

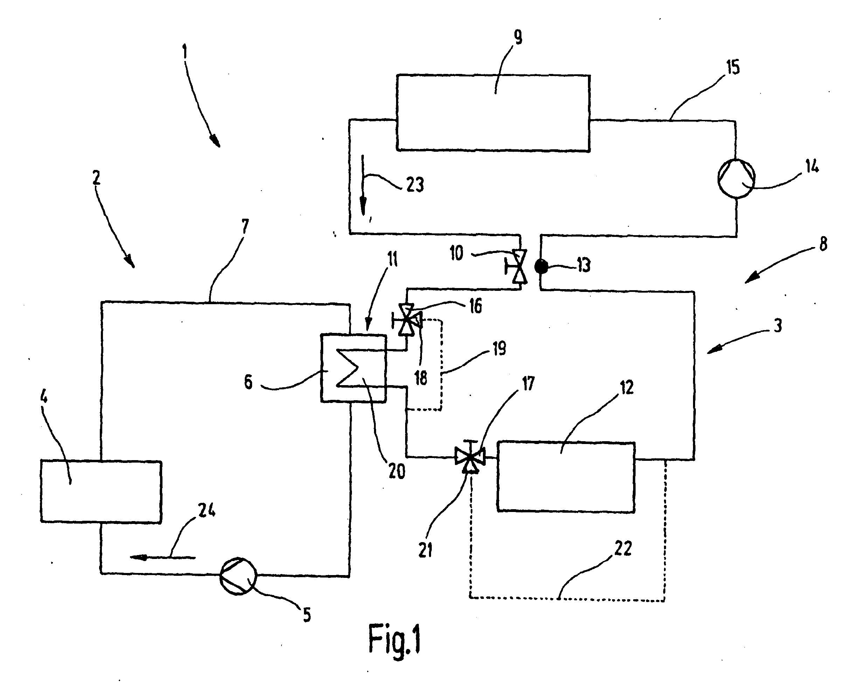

Die Figur 1 zeigt ein Fahrzeug-Kühlsystem 1, das einen Kühlkreis 2 und einen Kältekreis beziehungsweise Kältekreislauf 3 aufweist. Im Kühlkreis 2 befindet sich eine temperaturerhöhende Einrichtung 4, eine Umwälzpumpe 5 und ein erster Wärmetauscher 6. Der Kühlkreis 2 wird mit einem Kühlmittel 7 betrieben, das von der Umwälzpumpe 5 im Kreislauf gefördert wird. Bei dem Kühlmittel 7 handelt es sich um eine Sole (insbesondere ein Wasser-Glysantin-Gemisch).

Bei der temperaturerhöhenden Einrichtung 4 kann es sich um ein Fahrzeug-Bauteil handeln, das im Betrieb Wärme abgibt. Insbesondere kann es sich hierbei um eine Batterie (wiederaufladbar) oder eine Brennstoffzelle handeln. Diese Einrichtungen sind insbesondere bei Elektrofahrzeugen oder Hybridfahrzeugen notwendig. Ein Hybridfahrzeug benötigt neben einer Hauptantriebseinheit (Verbrennungsmotor oder Brennstoffzelle) eine leistungsfähige Batterie, die eine sehr hohe Wärmelast erzeugt, die abzuführen ist. Diese Wärmelast kann bei hoher Antriebsleistung (zum Beispiel Bergpfad) bis zu 2 kW betragen. Die Batterie speist einen Elektromotor, der das Fahrzeug antreibt. Insofern stellt diese Batterie eine Fahrbatterie dar. Handelt es sich um ein reines Elektrofahrzeug, so treten die vorstehend genannten Probleme ebenfalls auf, wobei jedoch kein Verbrennungsmotor vorhanden ist, der Antrieb somit nur mittels elektrischer Energie erfolgt. Bei Brennstoffzellenfahrzeugen wird der Hauptantrieb als Elektromotor ausgebildet und von der Brennstoffzelle versorgt. Mittels einer Batterie kann der bereits erwähnte Elektromotor zusätzlich oder allein betrieben werden, um den Brennstoffzellenantrieb zu unterstützen oder anstelle der Brennstoffzelle die Batterie für den Antrieb zu verwenden. Bei allen vorstehend erwähnten Varianten besteht das Problem der Kühlung der Batterie beziehungsweise der Brennstoffzelle, also einer temperaturerhöhenden Einrichtung, deren Wärme abzuführen ist.

Die Erfindung sieht vor, zur Kühlung der temperaturerhöhenden Einrichtung 4 eine Klimaanlage 8 mitzuverwenden, das heißt die Klimaanlage 8 dient einerseits dazu, den Fahrgastinnenraum des Fahrzeugs zu temperieren und sie übernimmt erfindungsgemäß die weitere Aufgabe, zur Kühlung der temperaturerhöhenden Einrichtung 4 mit beizutragen. Es können dadurch deutlich höhere Wärmelasten von der Einrichtung 4 abgeführt werden, als mit einer reinen Luftkühlung. In der Figur 1 wird die Klimaanlage 8 durch den Kältekreis 3 veranschaulicht. Er weist einen Kondensator 9, ein Expansionsventil 10 mit einem am Verdampferaustritt eine Überhitzungsmessung vornehmenden Überhitzungssensor 13, einen zugehörigen Teil 11 des ersten Wärmetauschers 6, einen ersten Verdampfer 12 und einen Kompressor 14 auf. Das Expansionsventil 10 bildet mit der Überhitzungserfassung eine bauliche Einheit. Der zugehörige Teil 11 des ersten Wärmetauschers 6 bildet hinsichtlich des Kältekreises 3 einen zweiten Verdampfer 20. Die erwähnten Bauteile sind über ein Rohrleitungssystem miteinander verbunden, in dem mittels des Kompressors 14 ein Kältemittel 15 im Kreislauf gefördert wird. Bei dem Kältemittel handelt es sich vorzugsweise um R134a.

Die Figur 1 zeigt, dass im Kältekreis 3 zusätzlich zwei 3-Wege-Ventile 16 und 17 angeordnet sind, wobei sich das 3-Wege-Ventil 16 zwischen dem Expansionsventil 10 und dem zugehörigen Teil 11 des ersten Wärmetauschers 6 befindet und ein Abzweig 18 zu einem Bypass 19 aufweist, der zum zugehörigen Teil 11 des ersten Wärmetauschers 6 parallel liegt. Das weitere 3-Wege-Ventil 17 liegt zwischen dem ersten Verdampfer 12 und dem zweiten Verdampfer 20 und weist einen Abzweig 21 auf, von dem ein parallel zum ersten Verdampfer 12 liegender Bypass 22 abgeht.

Es ergibt sich folgende Funktion: Das sich im flüssigen Zustand befindliche Kältemittel 15 strömt vom Kondensator 9 zum Expansionsventil 10. Die Förderung erfolgt durch den Kompressor 14. Die Förderrichtung ist mittels des Pfeiles 23 gekennzeichnet. Durch das Expansionsventil 10 wird das Kältemittel 15 entspannt. Im zweiten Verdampfer 20 beginnt das Kältemittel 15 zu verdampfen. Im ersten Verdampfer 12 wird das Kältemittel 15 komplett verdampft. Dabei nimmt der zweite Verdampfer 20 Wärme aus dem Kühlkreis 2 auf und der erste Verdampfer 12 ist in der Lage, an ihm vorbeiströmende Luft abzukühlen, die zur Kühlung des Fahrzeuginnenraumes eingesetzt wird. Im ersten Verdampfer 12 erfolgt eine leichte Überhitzung des Kältemittels 15, die auf der Heißgasseite gemessen wird (Überhitzungssensor 13) und direkt die Einstellung der Kältemittelmenge auf der Einspritzseite (Expansionsventil 10) über eine Nadel regelt oder steuert. Das Expansionsventil 10 wird also in Abhängigkeit von der Temperaturmessung des Überhitzungssensors 13 geregelt oder gesteuert. Der Kompressor 14 verdichtet das Kältemittel 15, so dass es im Kondensator 9 bei hohem Druck und unter Erwärmen kondensiert, wobei die Wärme vorzugsweise an die Außenluft abgegeben wird.

Im Kühlkreis 2 wird das Kühlmittel 7, das eine Kühlflüssigkeit ist, mittels der Umwälzpumpe 5 in Richtung des Pfeiles 24 gefördert, so dass es die temperaturerhöhende Einrichtung 4 passiert und dabei Wärme aufnimmt, das heißt, die temperaturerhöhende Einrichtung 4 wird gekühlt. Das Kühlmittel 7 gelangt dann zum ersten Wärmetauscher 6, wo es seine Wärme aufgrund der Wärmetauschfunktion an den Kältekreis 3 abgeben kann. Die Kühlflüssigkeit 7 behält im Kühlkreislauf 2 stets ihren flüssigen Aggregatzustand bei.

Um -je nach Bedarf- zwischen einer reinen Kühlung der temperaturerhöhenden Einrichtung 4, also beispielsweise einer Batteriekühlung, und reinem Klimaanlagenbetrieb umschalten zu können oder das Verhältnis der Kältemittelmassenströme, mit denen die beiden Verdampfer 12 und 20 das Kältemittel 15 verdampfen, einstellen zu können, sind die Bypässe 19 und 22 mittels der 3-Wege-Ventile 16 und 17 beeinflussbar. Je nach Stellung des 3-Wege-Ventils 16 durchströmt das gesamte Kältemittel 15 den zweiten Verdampfer 20 oder es findet nur eine Teildurchströmung oder gar keine Durchströmung statt, je nachdem, wie weit der Bypass 19 geöffnet wird. Entsprechend lässt sich der erste Verdampfer 12 steuern, der entweder von dem gesamten Kältemittel 15 durchströmt wird oder diesen mittels des Bypasses 22 teilweise oder vollständig umströmt.

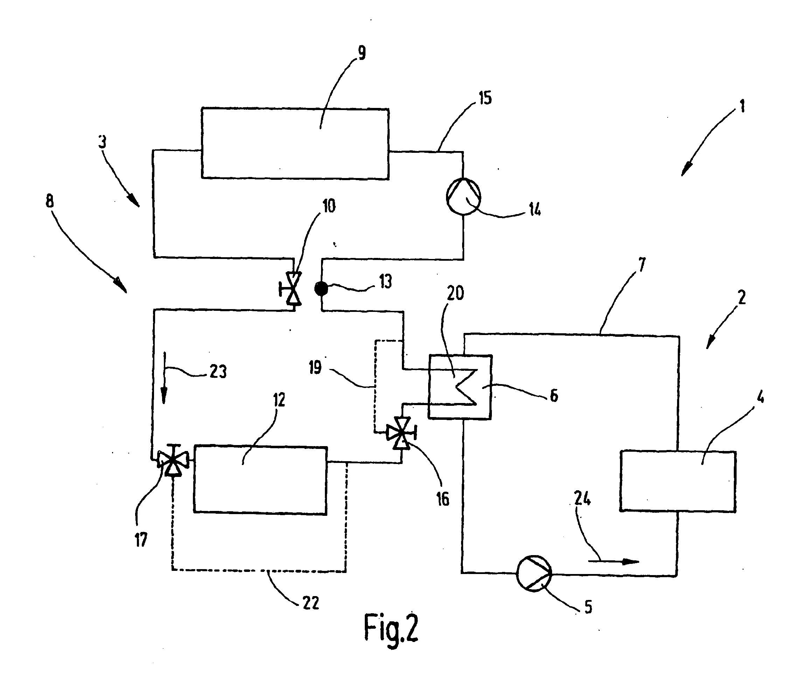

Die Figur 2 zeigt ein Ausführungsbeispiel, bei dem -in Strömungsrichtung des Kältemittels 15 des Kältekreises 3 betrachtet (Pfeil 23)- vom Expansionsventil 10 kommend zunächst der erste Verdampfer 12 und dann der zweite Verdampfer 20 des ersten Wärmetauschers 6 durchströmt wird. Es liegt somit gegenüber dem Ausführungsbeispiel der Figur 1 ein Vertauschen der beiden Verdampfer 12 und 20 hinsichtlich der Strömungsrichtung des Kältemittels 15 vor. Auch beim Ausführungsbeispiel der Figur 2 erfolgt eine Überhitzung des Kältemittels 15, dies jedoch nunmehr im zweiten Verdampfer 20. Auch hier wird das Expansionsventil 10 entsprechend der Überhitzung gesteuert beziehungsweise geregelt. Im Übrigen entspricht der Aufbau des Ausführungsbeispiels der Figur 2 dem des Ausführungsbeispiels der Figur 1, so dass auf den zugehörigen Text verwiesen wird.

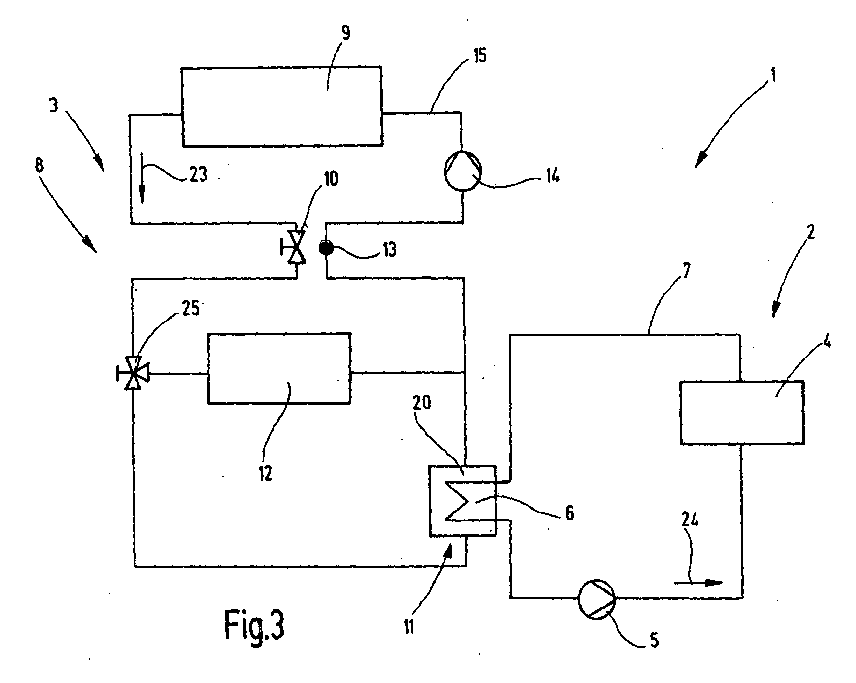

Das Ausführungsbeispiel der Figur 3 unterscheidet sich zu den Ausführungsbeispielen der Figuren 1 und 2 dadurch, dass innerhalb des Kältekreises 3 der erste Verdampfer 12 und der zweite Verdampfer 20 zueinander parallel geschaltet sind. Die Einspritzungsmenge des Kältemittelmassenstromes in die beiden parallel geschalteten Verdampfer 12 und 20 erfolgt in Abhängigkeit der (gemeinsamen) Messung der Überhitzung. Mittels eines 3-Wege-Ventils 25, das das gemeinsame Expansionsventil 10 mit dem ersten Verdampfer 12 und mit dem zweiten Verdampfer 20 verbindet, können die Massenströme des Kältemittels 15 separat eingestellt werden. So ist es beispielsweise auch möglich, einen der parallelen Stränge zu- oder abzuschalten beziehungsweise auf bestimmte Werte einzustellen.

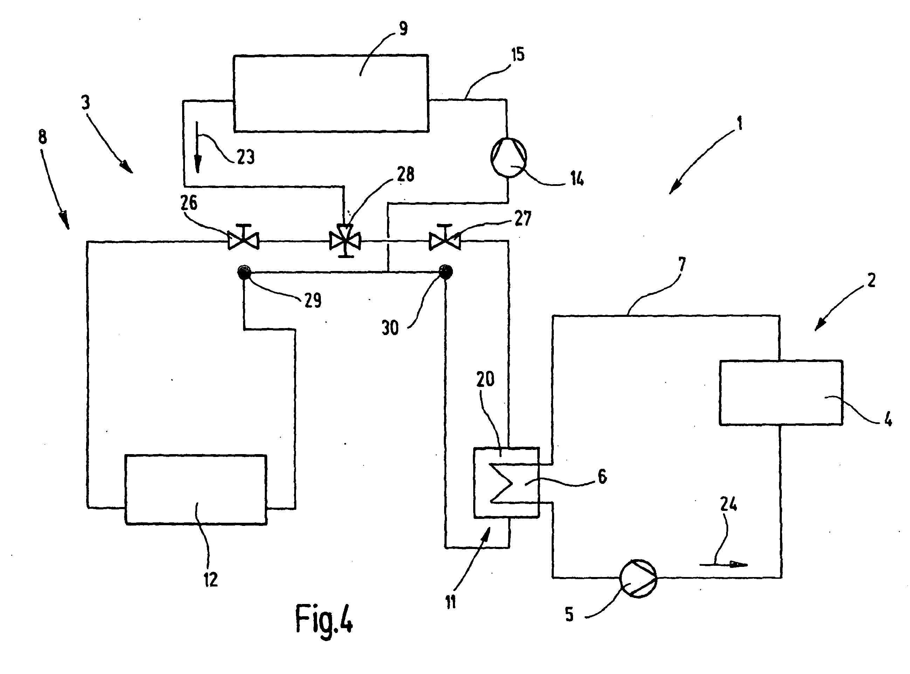

Das Fahrzeug-Kühlsystem der Figur 4 gehört nicht zu der Erfindung und unterscheidet sich von dem Ausführungsbeispiel der Figur 3 dadurch, dass zwar ebenfalls eine Parallelschaltung der beiden Verdampfer 12 und 20 im Kältekreis 3 vorliegt, jedoch lassen sich die Kältemittelmassenströme für beide Verdampfer 12, 20 jeweils durch ein eigenes Expansionsventil steuern oder regeln. Die beiden Expansionsventile sind in der Figur 4 mit dem Bezugszeichen 26 und 27 gekennzeichnet. Die Anordnung ist derart getroffen, dass -vom Kondensator 9 kommend- das Kältemittel 15 zunächst zu einem 3-Wege-Ventil 28 gelangt, von dem es auf die beiden Expansionsventile 26 und 27 verteilt wird. Hierdurch lassen sich die beiden Teilkreisläufe separat einstellen oder aber auch zu- beziehungsweise abschalten. Ferner ist es möglich, die beiden Expansionsventile 26 und 27 getrennt zu steuern oder zu regeln, wobei als Regelungsgröße die Überhitzungen an zwei Überhitzungsmeßorten 29 und 30 vorgesehen. Der Überhitzungsmeßort 29 ist strömungstechnisch dem ersten Verdampfer 12 und der Überhitzungsmeßort 30 ist strömungstechnisch dem zweiten Verdampfer 20 nachgeschaltet. Die Messung am Überhitzungsmeßort 29 wirkt mit dem Expansionsventil 26 und die Messung am Überhitzungsmeßort 30 mit dem Expansionsventil 27 zusammen. Es ist durch entsprechende Regelung der Expansionsventile 26 und 27 beispielsweise möglich, in beiden Teilkreisläufen gleiche Überhitzungstemperaturen einzustellen. Natürlich kann auch ein asymmetrischer Betrieb gefahren werden.

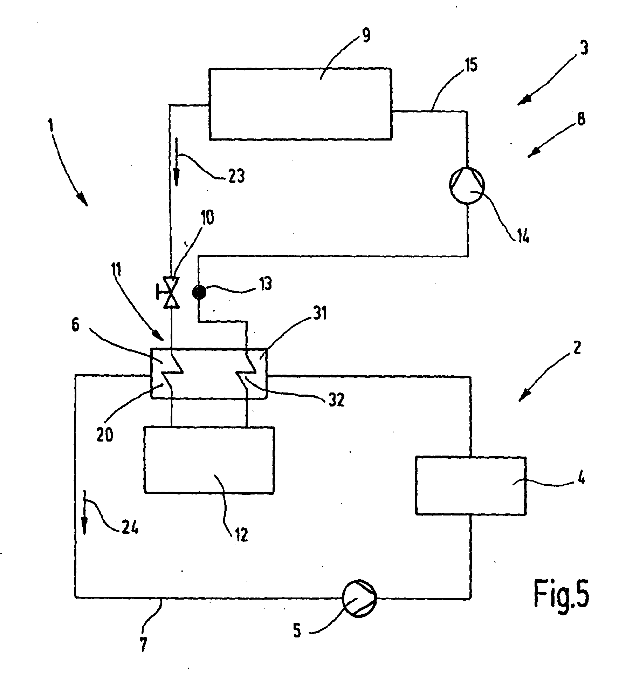

Das Ausführungsbeispiel der Figur 5 sieht ein Kühlmittel-Kältemittel-Temperaturaustausch sowohl vor als auch nach dem ersten Verdampfer 12 vor, das heißt, der der Klimaanlage 8 zugeordnete Klimaverdampfer (erster Verdampfer 12) liegt nachgeschaltet dem ersten Wärmetauscher 6 und vorgeschaltet zu einem zweiten Wärmetauscher 31, der für den Wärmeaustausch zwischen einem Kältemittel 15 führenden dritten Verdampfer 32 und dem Kühlkreis 2 mitverantwortlich ist. Im Einzelnen gelangt das Kältemittel 15 vom Expansionsventil 10 zum zweiten Verdampfer 20 des ersten Wärmetauschers 6, dann zum ersten Verdampfer 12 und von dort zum dritten Verdampfer 32 des zweiten Wärmetauschers 31. Von dort aus strömt das Kältemittel 15 dann unter Passieren des Überhitzungssensors 13 des Expansionsventils 10 und des Kompressors 14 zum Kondensator 9.

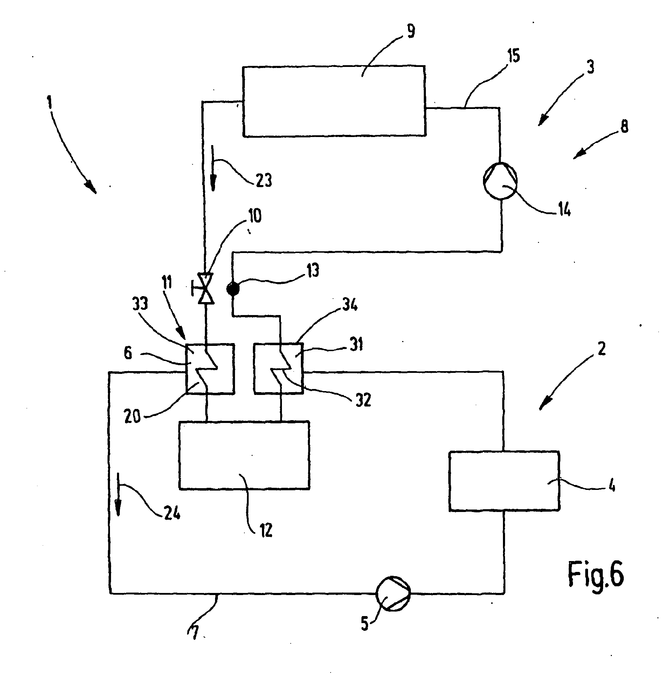

Während im Ausführungsbeispiel der Figur 5 der erste und der zweite Wärmetauscher 6, 31 eine gemeinsame Baueinheit bilden, kann -gemäß Figur 6- auch vorgesehen sein, dass der erste und der zweite Wärmetauscher 6, 31 separate Bauteile 33 und 34 bilden. Hierdurch ergeben sich zwei separate Wärmeübertrager, die kältemittelseitig vor und nach dem eigentlichen Klimaverdampfer (erster Verdampfer 12) eingebaut sind.

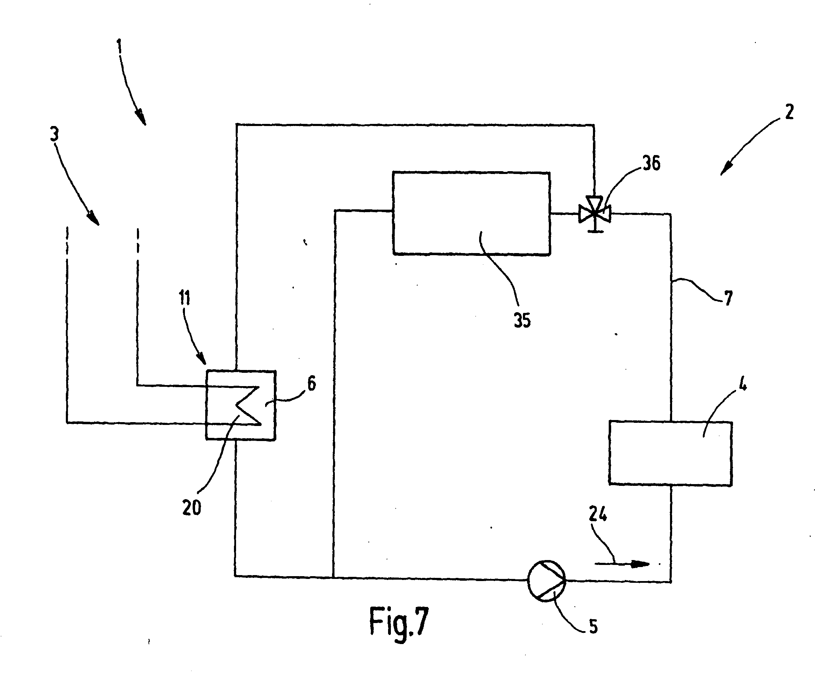

Um die zusätzliche Wärmelast des Kühlkreises 2 über den Klimakreislauf (Kältekreis 3) der Klimaanlage 8 abführen zu können, ohne dass die Leistungsfähigkeit der Klimaanlage 8 wesentlich beeinträchtigt wird, muss der Kompressor 14 einen größeren Kältemittelmassenstrom fördern. Ferner sollte der Kondensator 9 deutlich größer ausgeführt werden, als bei Klimaanlagen, die lediglich zur Kühlung des Fahrgastinnenraumes des Fahrzeugs ausgelegt sind. Liegen nur geringe Wärmelasten der temperaturerhöhenden Einrichtung 4 vor, die unterhalb von 1 bis 1,5 kW liegen, so ist ein Betrieb der Klimaanlage 8 ohne nennenswerte Beeinträchtigung möglich. Steigt dagegen der Wärmeeintrag durch die temperaturerhöhende Einrichtung 4 auf etwa 2 kW, so kann es zu einer Beeinträchtigung der Klimaleistung der Klimaanlage 8 kommen. Um hier Gegenmaßnahmen zu ergreifen, ist es möglich, im Kühlkreis 2 zusätzliche Wärmetauscher, insbesondere Luft/Kühlmittel-Wärmetauscher einzusetzen. Im Falle des Ausführungsbeispiels der Figur 7 (die den Kühlkreis 2 komplett und den Kältekreis 3 nur bereichsweise zeigt) ist ein zusätzlicher Kühler 35 vorgesehen. Dieser liegt parallel zum ersten Wärmetauscher 6. Mittels eines 3-Wege-Ventils 36 lässt sich der Kühlmittelmassenstrom entsprechend aufteilen oder absperren, so dass in gewünschter Weise eine Durchströmung des Wärmetauschers 6 und des ersten zusätzlichen Kühlers 35 erfolgt.

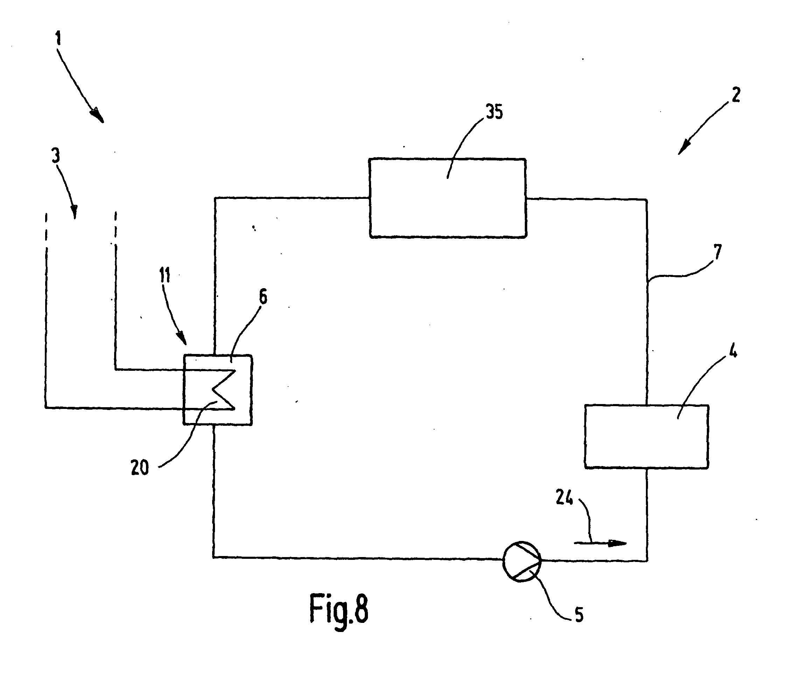

Alternativ zum Ausführungsbeispiel der Figur 7 kann jedoch auch vorgesehen sein, dass der Kühler 35 in Reihe zum ersten Wärmetauscher 6 liegt. Der zusätzliche Kühler 35 kann bevorzugt als Luftkühler ausgebildet sein, das heißt, er wird im Fahrtwind des Fahrzeugs angeordnet und/oder liegt im Kühlluftstrom eines Ventilators. Sind aufgrund der Witterung höhere Lufttemperaturen vorhanden, so würde man -im Ausführungsbeispiel der Figur 8- den Luftkühler gegebenenfalls gar nicht mit Luft beaufschlagen, sondern die Kühlung der temperaturerhöhenden Einrichtung 4 nur mit dem ersten Wärmetauscher 6 vornehmen. In einem solchen Falle ist es jedoch möglich, die Kühlluft aus dem Fahrgastinnenraum anzusaugen, da diese durch die Klimaanlage 8 ein niedrigeres Temperaturniveau aufweist als die Außenluft. Dieses Ansaugen aus dem Fahrgastinnenraum erfolgt vorzugsweise stets dann, wenn die Luft dort kälter als etwa 25 bis 30°C ist. Liegt die Außenlufttemperatur unterhalb des erwähnten Temperaturbereichs von 25 bis 30°C, so ist es alternativ oder zusätzlich auch möglich, Umgebungsluft anzusaugen und damit den Kühler 35 zu beströmen. Alternativ oder zusätzlich ist es möglich, auf die Wärmetauscheroberfläche des Kühlers 35 Wasser aufzubringen, um durch Verdunstungskühlung die Leistung zu erhöhen oder zusätzlich zu erhöhen. Dieses Wasser könnte von einem vom Fahrzeug mitgeführten Vorratsbehälter stammen, der insbesondere zusätzlich mit Kondensatwasser der Klimaanlage 8 gefüllt wird. Das Kondensatwasser fällt am Klimaverdampfer (erster Verdampfer 12) der Klimaanlage durch Abkühlung aus.

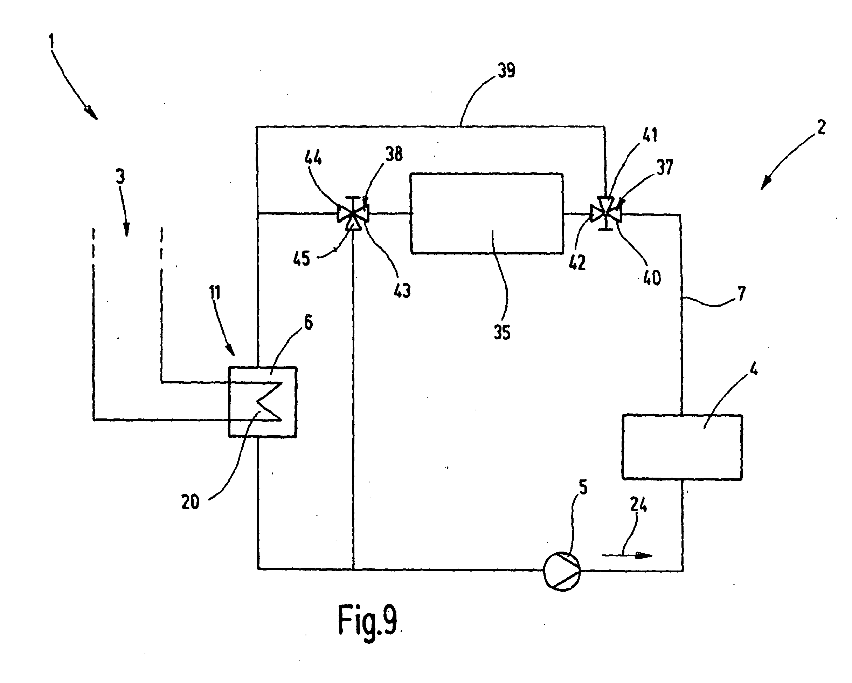

Die Figur 9 zeigt ein Ausführungsbeispiel, bei der je nach Wärmelast und Kühllufttemperatur der Kühler 35 und der erste Wärmetauscher 6 zu- oder abgeschaltet beziehungsweise im Kühlmittelvolumenstrom eingestellt werden können. Das Zu- beziehungsweise Abschalten beziehungsweise Einstellen der beiden Wärmetauscher (Kühler 35, erster Wärmetauscher 6) hat insbesondere für einen Sommer- beziehungsweise Winterbetrieb Vorteile. Im Sommer ist bei hohen Lufttemperaturen über etwa 25 bis 30°C nur eine reine Wärmeabfuhr über den Klimakreislauf (Kältekreislauf 3) empfehlenswert. Für diese Einstellung weist das Ausführungsbeispiel der Figur 9 zwei 3-Wege-Ventile 37, 38 auf, die eingangs- und ausgangsseitig des Kühlers 35 liegen. Ein Abzweig 40, des 3-Wege-Ventils 37 steht mit der temperaturerhöhenden Einrichtung 4 in Verbindung. Ein weiterer Abzweig 41 führt zum Bypass 39. Ein Abzweig 42 des 3-Wege-Ventils 37 führt zum Eingang des Kühlers 35. Ein Abzweig 43 des 3-Wege-Ventils 38 führt zum Ausgang des Kühlers 35. Ein Abzweig 44 des 3-Wege-Ventils 48 ist mit dem Bypass 39 und dem ersten Wärmetauscher 6 verbunden. Ein Abzweig 45 des 3-Wege-Ventils 38 führt -unter Umgehung des ersten Wärmetauschers 6- zur Umwälzpumpe 5.

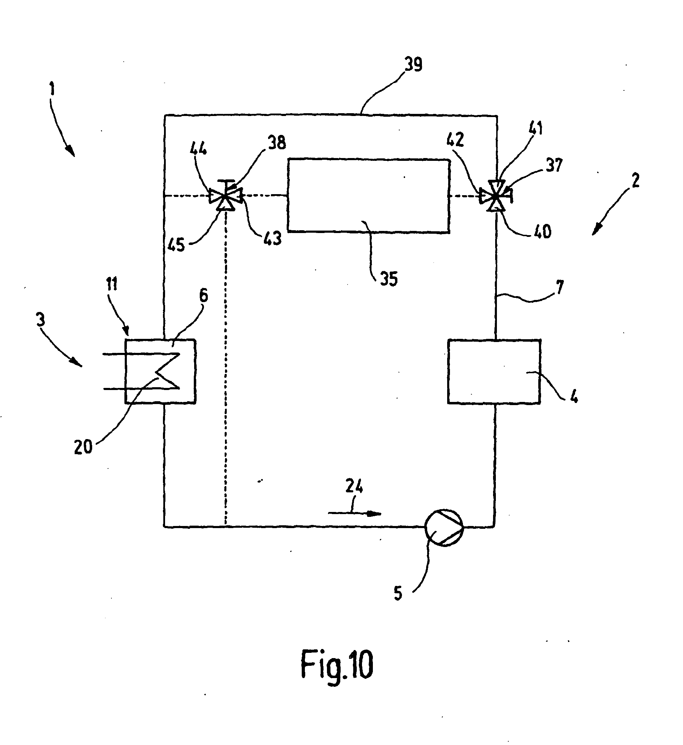

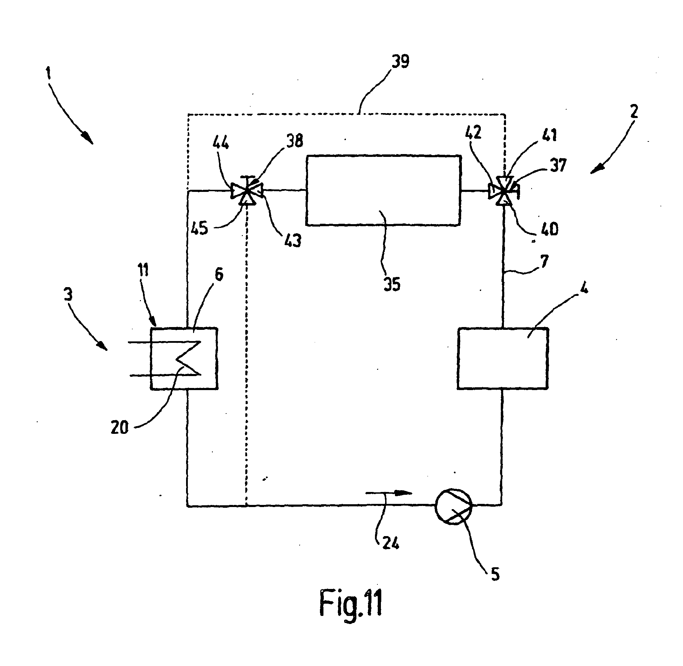

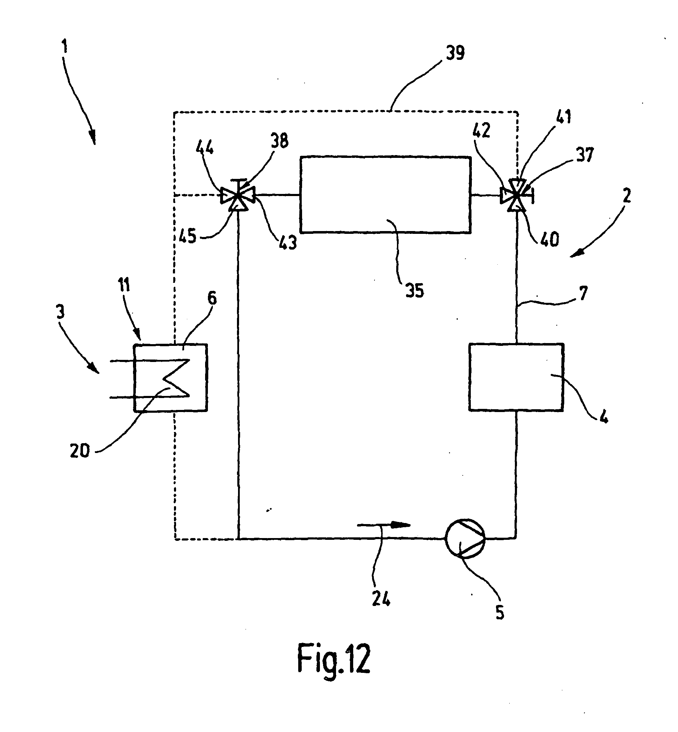

Im Sommer ist bei hohen Lufttemperaturen über etwa 25 bis 30°C nur eine reine Wärmeabfuhr der temperaturerhöhenden Einrichtung 4 über den Kältekreislauf 3 wünschenswert. In einem solchen Falle werden die beiden 3-Wege-Ventile 37 und 38 derart eingestellt, dass sich die Situation gemäß Figur 10 darstellt. Die gestrichelten Linien bedeuten, dass diese Zweige nicht in Funktion sind. Der zusätzliche Kühler 35 ist somit außer Betrieb genommen; das gesamte Kühlmittel 7 durchströmt den ersten Wärmetauscher 6. Liegen allerdings moderate Lufttemperaturen (ca. 15 bis 25°C) vor, ist eine Temperaturminderung des Kühlmittels 7 sowohl über den Kühler 35 als auch über den ersten Wärmetauscher 6 möglich. Diese Situation ist in Figur 11 dargestellt. Das von der temperaturerhöhenden Einrichtung 4 kommende Kühlmittel 7 durchströmt mit vollem Volumenstrom den Kühler 35 und anschließend den ersten Wärmetauscher 6. Reicht im Winter unter Umständen die Luftkühlung mittels Kühler 35 alleine aus, um die Wärmelast der temperaturerhöhenden Einrichtung 4 abzuführen, so wird der Betrieb gemäß Figur 12 vorgenommen. Das Kühlmittel 7 durchströmt mit vollem Volumenstrom den Kühler 35 und von dort zurück zur Umwälzpumpe 5. Das 3-Wege-Ventil 38 ist demzufolge derart eingestellt, dass das Kühlmittel 7 den ersten Wärmetauscher 6 umgeht.

## Patentansprüche

1. Fahrzeug-Kühlsystem für eine temperaturerhöhende Einrichtung (4), insbesondere Fahrbatterie oder Brennstoffzelle, vorzugsweise für ein Elektro- oder Hybridfahrzeug, mit einem die Einrichtung unter Einbeziehung einer die Luftkonditionierung der Fahrgastzelle des Fahrzeugs dienenden Klimaanlage (8) kühlenden Kühlmittel (7), wobei das Kühlmittel (7) eine Kühlflüssigkeit ist, die in einem Kühlkreis (2) geführt wird mit einem ersten Wärmetauscher (6), ein Kältekreis (3) der Klimaanlage (8) mindestens einen Kompressor (14), mindestens einen Kondensator (9), genau ein Expansionsventil (10; 26, 27) und mindestens einen der Luftkonditionierung dienenden, ersten Verdampfer aufweist, weiterhin die Kühlflüssigkeit zu ihrer Kühlung thermisch in den Kältekreislauf (3) der Klimaanlage (8) eingebunden ist, derart, dass der dem Kältekreis (3) der Klimaanlage (8) zugehörige Teil (11) des ersten Wärmetauschers (6) einen zweiten Verdampfer (20) bildet, wobei das genau eine Expansionsventil einen an einem Verdampferaustritt eine Überhitzungsmessung vornehmenden Überhitzungssensor hat.

2. Fahrzeug-Kühlsystem nach Anspruch 1, **dadurch gekennzeichnet, dass** das Kühlmittel (7) über einen ersten Wärmetauscher (6) mit dem Kältemittel (15) der Klimaanlage (8) gekoppelt ist.

3. Fahrzeug-Kühlsystem nach einem der vorhergehenden Ansprüche, **dadurch gekennzeichnet, dass** die Kühlflüssigkeit (7) stets ihren Aggregatzustand beibehält.

4. Fahrzeug-Kühlsystem nach einem der vorhergehenden Ansprüche, **dadurch gekennzeichnet, dass** der Kühlkreis (2) mindestens eine Umwälzpumpe (5) aufweist.

5. Fahrzeug-Kühlsystem nach einem der vorhergehenden Ansprüche, **dadurch gekennzeichnet, dass** der erste und der zweite Verdampfer (12,20) getrennte Bauteile sind oder eine Baueinheit bilden.

6. Fahrzeug-Kühlsystem nach einem der vorhergehenden Ansprüche, **dadurch gekennzeichnet, dass** der erste und/oder der zweite Verdampfer (12,20) mit einem Bypass (19,22) versehen ist/sind.

7. Fahrzeug-Kühlsystem nach einem der vorhergehenden Ansprüche, **dadurch gekennzeichnet, dass** der Bypass oder jeder Bypass (19,22) ein Steuer- oder Regelventil (16,17) aufweist.

8. Fahrzeug-Kühlsystem nach einem der vorhergehenden Ansprüche, **dadurch gekennzeichnet, dass** das Expansionsventil (10;26,27) zwischen dem Kondensator (9) und dem ersten oder zweiten Verdampfer (12,20) angeordnet ist.

9. Fahrzeug-Kühlsystem nach einem der vorhergehenden Ansprüche, **dadurch gekennzeichnet, dass** sich zwischen dem ersten oder zweiten Verdampfer (12,20) und dem Kompressor (14) ein Überhitzungsmessort für eine das Expansionsventil (10;26,27) steuernde oder regelnde Überhitzungsmessung befindet.

10. Fahrzeug-Kühlsystem nach einem der vorhergehenden Ansprüche, **dadurch gekennzeichnet, dass** der erste Verdampfer (12) stromaufwärts oder stromabwärts zum zweiten Verdampfer (20) liegt.

11. Fahrzeug-Kühlsystem nach einem der vorhergehenden Ansprüche, **dadurch gekennzeichnet, dass** erster und zweiter Verdampfer (12,20) parallel zueinander geschaltet sind.

12. Fahrzeug-Kühlsystem nach einem der vorhergehenden Ansprüche, **gekennzeichnet durch** einen -hinsichtlich der Kältemittelströmungstromabwärts des ersten Verdampfers (12) liegenden dritten Verdampfer (32), der einen Bestandteil eines zweiten Wärmetauschers (31) zur Kühlung der temperaturerhöhenden Einrichtung (4) bildet.

13. Fahrzeug-Kühlsystem nach einem der vorhergehenden Ansprüche, **dadurch gekennzeichnet, dass** der erste und der zweite Wärmetauscher (6,31) separate Bauteile (33,34) sind oder dass der erste und der zweite Wärmetauscher (6,31) eine Baueinheit bilden.

14. Fahrzeug-Kühlsystem nach einem der vorhergehenden Ansprüche, **dadurch gekennzeichnet, dass** der Kühlkreis (2) mindestens einen zusätzlichen Kühler (35) für das Kühlmittel (7) aufweist.

15. Fahrzeug-Kühlsystem nach einem der vorhergehenden Ansprüche, **dadurch gekennzeichnet, dass** erster und/oder zweiter Wärmetauscher (6,31) und Kühler (35) parallel oder in Reihe geschaltet sind.

16. Verfahren zur Kühlung einer temperaturerhöhenden Fahrzeug-Einrichtung, insbesondere Fahrbatterie oder Brennstoffzelle, vorzugsweise für ein Elektro- oder Hybridfahrzeug, mit einem Fahrzeug-Kühlsystem mach zumindest einem der vorhergehenden Ansprüche.

## Claims

1. Vehicle cooling system for a temperature-increasing device (4), particularly a vehicle battery or fuel cell, preferably for an electric or hybrid vehicle, with a coolant (7) cooling the device, incorporating an air-conditioning system (8) serving for the air-conditioning of the passenger area of the vehicle, wherein the coolant (7) is a cooling liquid which is guided in a cooling circuit (2) with a first heat exchanger (6), a refrigerating circuit (3) of the air conditioning system (8) comprises at least one compressor (14), at least one condenser (9), exactly one expansion valve (10; 26, 27) and at least a first evaporator (12) serving for the air conditioning, furthermore the cooling liquid (3) is incorporated for its cooling thermally into the refrigerating circuit (3) of the air conditioning system (8) in such a manner that the part (11) of the first heat exchanger (6) associated with the refrigerating circuit (3) of the air conditioning system (8) forms a second evaporator (20),
wherein the exactly one expansion valve has an overheat sensor carrying out an overheat measurement at an evaporator outlet.

2. Vehicle cooling system according to claim 1, **characterised in that** the coolant (7) is coupled with the refrigerant (15) of the air conditioning system (8) by means of a first heat exchanger (6).

3. Vehicle cooling system according to one of the preceding claims, **characterised in that** the cooling liquid (7) constantly maintains its unit state.

4. Vehicle cooling system according to one of the preceding claims, **characterised in that** the cooling circuit (2) has at least one circulating pump (5).

5. Vehicle cooling system according to one of the preceding claims, **characterised in that** the first and the second evaporator (12, 20) are separate components or form a unit.

6. Vehicle cooling system according to one of the preceding claims, **characterised in that** the first and / or the second evaporator (12, 20) is / are provided with a bypass (19, 22).

7. Vehicle cooling system according to claim 1, **characterised in that** the bypass or each bypass (19, 22) comprises a control or regulating valve (16, 17).

8. Vehicle cooling system according to one of the preceding claims, **characterised in that** the expansion valve (10; 26, 27) is disposed between the condenser (9) and the first or second evaporator (12, 20).

9. Vehicle cooling system according to one of the preceding claims, **characterised in that** a superheat measuring point for a superheat measurement controlling or regulating the expansion valve (10; 26, 27) is disposed between the first or second evaporator (12, 20) and the compressor (14).

10. Vehicle cooling system according to one of the preceding claims, **characterised in that** the first evaporator (12) lies upstream or downstream of the second evaporator (20).

11. Vehicle cooling system according to one of the preceding claims, **characterised in that** the first and second evaporator (12, 20) are connected in parallel with each other.

12. Vehicle cooling system according to one of the preceding claims, **characterised by** a third evaporator (32) lying downstream - with regard to the flow of refrigerant - of the first evaporator (12) which forms a component of a second heat exchanger (31) for cooling the temperature-increasing device (4).

13. Vehicle cooling system according to one of the preceding claims, **characterised in that** the first and the second heat exchanger (6, 31) are separate components (33, 34) or **in that** the first and the second heat exchanger (6, 31 ) form one unit.

14. Vehicle cooling system according to one of the preceding claims, **characterised in that** the cooling circuit (2) comprises at least one additional cooler (35) for the coolant (7).

15. Vehicle cooling system according to one of the preceding claims, **characterised in that** the first and / or second heat exchanger (6, 31) and cooler are connected in parallel or in series.

16. Method for cooling a temperature-increasing vehicle device, particularly a vehicle battery or fuel cell, preferably for an electric or hybrid vehicle, with a vehicle cooling system according to at least one of the preceding claims.

## Revendications

1. Système de refroidissement d'un véhicule pour un dispositif (4) d'augmentation de la température, en particulier batterie de traction ou cellule de combustible, de préférence pour un véhicule électrique ou un véhicule hybride, comprenant un réfrigérant (7) refroidissant le dispositif avec l'intégration d'une installation de climatisation (8) servant au conditionnement d'air de l'habitacle du véhicule, le réfrigérant (7) étant un liquide de refroidissement, qui est guidé dans un circuit de refroidissement (2) avec un premier échangeur de chaleur (6), un circuit frigorifique (3) de l'installation de climatisation (8) comprenant un moins un compresseur (14), au moins un condenseur (9), précisément une vanne de détente (10; 26, 27) et au moins un premier évaporateur (12) servant au conditionnement d'air, le liquide de refroidissement étant également intégré pour son refroidissement au plan thermique dans le circuit frigorifique (3) de l'installation de climatisation (8), de telle sorte que la partie (11), appartenant au circuit frigorifique (3) de l'installation de climatisation (8), du premier échangeur de chaleur (6) forme un second évaporateur (20),
dans lequel ladite précisément une vanne de détenté a un capteur de surchauffe effectuant une mesure de surchauffe sur une sortie d'évaporateur.

2. Système de refroidissement d'un véhicule selon la revendication 1, **caractérisé en ce que** le réfrigérant (7) est couplé par un premier échangeur de chaleur (6) au réfrigérant (15) de l'installation frigorifique (8).

3. Système de refroidissement d'un véhicule selon l'une quelconque des revendications précédentes, **caractérisé en ce que** le liquide de refroidissement (7) conserve toujours son état physique.

4. Système de refroidissement d'un véhicule selon l'une quelconque des revendications précédentes, **caractérisé en ce que** le circuit de refroidissement (2) présente au moins une pompe de circulation (5).

5. Système de refroidissement d'un véhicule selon l'une quelconque des revendications précédentes, **caractérisé en ce que** le premier et le second évaporateurs (12, 20) sont des composants séparés ou forment un module.

6. Système de refroidissement d'un véhicule selon l'une quelconque des revendications précédentes, **caractérisé en ce que** le premier et/ou le second évaporateurs (12, 20) est/sont doté(s) d'un by-pass (19, 22).

7. Système de refroidissement d'un véhicule selon la revendication 6, **caractérisé en ce que** le by-pass ou tout by-pass (19, 22) présente une vanne de commande ou de réglage (16, 17).

8. Système de refroidissement d'un véhicule selon l'une quelconque des revendications précédentes, **caractérisé en ce que** la vanne de détente (10 ; 26, 27) est disposée entre le condenseur (9) et le premier ou le second évaporateur (12, 20).

9. Système de refroidissement d'un véhicule selon l'une quelconque des revendications précédentes, **caractérisé en ce qu'**un point de mesure de surchauffe pour une mesure de surchauffe commandant ou réglant la vanne de détente (10 ; 26, 27) se trouve entre le premier ou le second évaporateur (12, 20) et le compresseur (14).

10. Système de refroidissement d'un véhicule selon l'une quelconque des revendications précédentes, **caractérisé en ce que** le premier évaporateur (12) est disposé en amont ou en aval du second évaporateur (20).

11. Système de refroidissement d'un véhicule selon l'une quelconque des revendications précédentes, **caractérisé en ce que** le premier et le second évaporateurs (12, 20) sont branchés parallèlement entre eux.

12. Système de refroidissement d'un véhicule selon l'une quelconque des revendications précédentes, **caractérisé par** un troisième évaporateur (32) disposé en aval du premier évaporateur (12) - par rapport à l'écoulement du réfrigérant - qui forme un constituant d'un second échangeur de chaleur (31 ) pour le refroidissement de l'appareil (4) d'augmentation de température.

13. Système de refroidissement d'un véhicule selon l'une quelconque des revendications précédentes, **caractérisé en ce que** le premier et le second échangeurs de chaleur (6, 31) sont des composants (33, 34) séparés ou **en ce que** le premier et le second échangeurs de chaleur (6, 31) forment un module.

14. Système de refroidissement d'un véhicule selon l'une quelconque des revendications précédentes, **caractérisé en ce que** le circuit de refroidissement (2) présente au moins un refroidisseur (35) supplémentaire pour le réfrigérant (7).

15. Système de refroidissement d'un véhicule selon l'une quelconque des revendications précédentes, **caractérisé en ce que** le premier et/ou le second échangeurs de chaleur (6, 31) et le refroidisseur (35) sont montés en parallèle ou en série.

16. Procédé pour le refroidissement d'un dispositif d'augmentation de température pour véhicule, en particulier batterie de traction ou cellule de combustible, de préférence pour un véhicule électrique ou véhicule hybride, comprenant un système de refroidissement de véhicule selon au moins l'une quelconque des revendications précédentes.
